# FASCICULE DE BREVET EUROPEEN

(11) **EP 2 607 046 B1**
(45) Date de publication et mention de la délivrance du brevet: **05.10.2016**
(21) Numéro de dépôt: 12193963.1
(22) Date de dépôt: 23.11.2012
(51) Int. Cl.: B29C 45/27, B29L 11/00, B60Q 1/04

(54) **Procédé de moulage d'un organe en plastique comprenant par exemple un miroir concave**
Formgussverfahren für ein Plastikelement, das beispielsweise einen konkaven Spiegel umfasst
Method for moulding a plastic member comprising, for example, a concave mirror

(30) Priorité: 19.12.2011 FR 1161866
(43) Date de publication de la demande: 26.06.2013
(73) Titulaire: VALEO VISION, 93012 Bobigny Cedex (FR)
(72) Inventeur: Esdourrubailh, Pascal, 49000 Angers (FR); Beaute, Gaetan, 49430 Montigne les Rairies (FR)

(56) Documents cités:
- EP-A1- 1 775 094
- EP-A2- 1 188 538
- JP-A- 10 000 656
- JP-A- 10 175 232
- JP-A- 59 019 128
- PALINKAS L: "ZWEIFACH-SPRITZGIESSWERKZEUG. ÖWERKZEUGTECHNIK FUER EIN HECKLEUCHTENGEHAEUSE AUS ABS", KUNSTOFFE INTERNATIONAL, CARL HANSER VERLAG, MUNCHEN, DE, vol. 85, no. 11, 1 novembre 1995 (1995-11-01), pages 1872-1875, XP000538140, ISSN: 0023-5563

## Description

La présente invention concerne le domaine du moulage d'un organe en plastique, notamment d'un organe en plastique comprenant un miroir concave pour dispositif optique pour véhicule automobile.

On connaît déjà dans l'état de la technique un dispositif optique pour véhicule automobile destiné à assurer une ou plusieurs fonctions d'éclairage, par exemple une fonction de projecteur et/ou une fonction d'indicateur de direction.

Un dispositif optique pour véhicule automobile peut ainsi comprendre un organe en plastique comportant une partie formant enjoliveur pour des moyens d'éclairage à faisceau elliptique,assurant une fonction de projecteur, et une partie formant réflecteur pour des moyens d'éclairage assurant une fonction d'indicateur de direction.

Dans ce qui suit, les orientations arrière et avant affectées à la description du réflecteur sont faites en référence au sens du trajet optique de la lumière.

Généralement, le réflecteur d'un indicateur de direction forme un miroir concave. Ce réflecteur comporte une douille arrière de réception d'un ensemble formant source de lumière et un bord avant prolongé par une jupe. La jupe est reliée au reste du réflecteur par un pli de matière plastique.

Habituellement, un organe en plastique de ce type, formant à la fois enjoliveur et réflecteur, est fabriqué par moulage dans un dispositif comprenant deux parties, respectivement fixe et mobile, déplaçables l'une par rapport à l'autre entre des positions d'ouverture et de fermeture du dispositif de moulage. Ces deux parties délimitent une cavité formant empreinte de moulage de l'organe en plastique.

La partie mobile du dispositif de moulage porte généralement des moyens d'éjection de l'organe en plastique moulé. Ces moyens d'éjection comprennent habituellement des organes d'éjection déplaçables en translation sensiblement parallèlement à une direction d'ouverture et de fermeture du dispositif de moulage.

Ces organes d'éjection sont susceptibles de laisser sur l'organe moulé des traces de contact visibles. On préfère donc éviter le contact des organes d'éjection avec des surfaces de l'organe moulé assurant une fonction esthétique importante.

Ainsi, c'est l'empreinte portée par la partie fixe du dispositif de moulage qui est de préférence destinée à former les surfaces de l'organe moulé devant respecter des contraintes esthétiques importantes, en particulier les surfaces en dépouille de la partie formant miroir concave de l'organe en plastique.

Lors du moulage, la matière plastique est injectée dans la cavité du dispositif de moulage au moyen d'une buse d'injection qui est portée par la partie fixe du dispositif de moulage. Or, c'est l'empreinte de la partie fixe du dispositif de moulage qui forme les surfaces de l'organe moulé ayant une fonction esthétique importante. Il convient donc d'éviter que la buse d'injection débouche directement dans une zone de l'empreinte de la partie fixe du dispositif de moulage destinée à former une surface ayant une fonction esthétique importante.

On peut choisir de faire déboucher la buse d'injection dans une zone de l'empreinte destinée à former une surface de l'organe moulé sans fonction esthétique. Toutefois, les choix de points d'injection de la matière plastique sont relativement restreints dans le cas du moulage d'un organe comportant notamment une jupe. En effet, l'extrémité de liaison de cette jupe avec le reste de l'organe moulé forme un passage privilégié de matière injectée, de forme générale annulaire, qui, après s'être rempli de matière, empêche celle-ci d'atteindre d'autres zones de la cavité de moulage.

Cependant, on observe que l'injection de matière par l'extrémité libre de la douille arrière du réflecteur permet une bonne répartition de la matière dans la cavité de moulage en évitant l'accès immédiat de la matière injectée au pli formé par la jupe.

Toutefois, l'accès d'une buse d'injection à la douille arrière du réflecteur est complexe compte tenu notamment du fait que la buse est portée par la partie fixe et que la douille n'a généralement pas un diamètre suffisant pour que la buse puisse passer à travers la partie du moule destinée à former la surface interne de la douille.

Le document JP 59 019128 décrit un appareil de moulage d'un organe en plastique, comprenant une partie fixe et une partie mobile définissant une cavité, la partie mobile comportant :
- un canal froid,
- des éjecteurs pour éjecter la carotte formée dans le canal froid,
- une partie de l'empreinte de la partie mobile étant délimitée par une cale de la partie mobile, cette cale étant déplaçable entre
   o une position entravant la course d'éjection de la carotte et
   o une position dégageant cette course d'éjection de la carotte.

Le document EP 1 775 094 divulgue un procédé pour le moulage par injection d'un article en matière plastique devant comporter au moins une zone prédéterminée présentant une résistance mécanique inférieure à un seuil prédéterminé selon une direction prédéterminée avant-arrière. Pendant le remplissage de la partie du moule définissant ladite zone, les lignes de flux de la matière plastique fondue sont substantiellement perpendiculaires à la direction prédéterminée avant-arrière.

L'invention a pour but de permettre le moulage d'un organe en plastique dans une cavité de moulage dont le point d'injection optimal est relativement difficile d'accès, comme dans le cas d'un organe en plastique comportant une partie formant un réflecteur tel que décrit plus haut.

A cet effet, l'invention a pour objet un procédé de moulage d'un organe en plastique, en utilisant un dispositif comprenant deux parties, respectivement fixe et mobile, déplaçables l'une par rapport à l'autre, ces deux parties portant respectivement deux empreintes formant une cavité de moulage de l'organe en plastique, la partie mobile comprenant :
- un canal froid, et
- des moyens mobiles destinés à éjecter de l'empreinte de la partie mobile une carotte formée dans le canal froid, dits moyens d'éjection de carotte,
   une partie de l'empreinte de la partie mobile étant délimitée par une sous-partie, appelée cale, de la partie mobile, cette cale étant déplaçable entre une position entravant la course d'éjection de la carotte et une position dégageant cette course d'éjection de la carotte, la partie mobile comprend de plus :
- des moyens mobiles destinés à éjecter, de l'empreinte de la partie mobile, l'organe moulé, dits moyens d'éjection d'organe moulé, et
- des moyens de séquencement des déplacements des moyens d'éjection de carotte, de la cale et des moyens d'éjection d'organe moulé.

Selon l'invention, on démoule cet organe en plastique, après moulage, en réalisant les étapes suivantes :
- on déplace la partie mobile par rapport à la partie fixe, l'organe moulé restant solidaire de la partie mobile,
- puis, on actionne les moyens d'éjection de l'organe moulé de façon à faire parcourir à cet organe moulé une course pendant une partie de laquelle la cale est déplacée dans le même sens que l'organe moulé pour dégager la course d'éjection de la carotte.

On appelle canal froid un canal ménagé dans le dispositif de moulage dans lequel subsiste, après injection de matière, une carotte reliée à l'organe moulé tant que ce dernier est dans le moule et destinée à être séparée de cet organe moulé lors de l'extraction de cet organe du moule. Le canal froid relie entre eux l'orifice de sortie de la buse d'injection de matière plastique et la cavité de moulage.

Grâce au canal froid, l'orifice de sortie de la buse d'injection peut être déporté par rapport à l'orifice du canal froid débouchant dans la cavité, ce qui facilite le positionnement de la buse dans le dispositif de moulage. De plus, le canal froid permet d'accéder au point optimal d'injection de matière dans la cavité par enjambement d'une partie de l'empreinte délimité par la cale mobile, ceci sans empêcher l'éjection de la carotte formée dans le canal froid du fait que la cale est déplaçable entre une position entravant la course d'éjection de la carotte et une position dégageant cette course d'éjection.

Suivant d'autres caractéristiques optionnelles du procédé de moulage :
- l'organe en plastique comprend un réflecteur formant miroir concave pour dispositif optique pour véhicule automobile, ce réflecteur comprenant une douille arrière de réception d'un ensemble formant une source de lumière, le canal froid communiquant avec une partie de l'empreinte de la partie mobile qui est destinée au moulage de cette douille.

Suivant d'autres caractéristiques optionnelles de ce procédé de moulage :
- la course d'éjection de l'organe moulé comprend :
   - un premier tronçon pendant lequel la cale est déplacée conjointement avec l'organe moulé, si bien que cet organe moulé reste solidaire de la cale, ce premier tronçon comportant un premier sous-tronçon pendant lequel les moyens d'éjection de carotte sont désactivés suivi d'un second sous-tronçon pendant lequel les moyens d'éjection de carotte sont activés, et
   - un second tronçon pendant lequel la cale est immobilisée, si bien que l'organe moulé se sépare de celle-ci ;
- pendant le second tronçon de la course d'éjection de l'organe moulé, les moyens d'éjection de carotte sont activés, ce second tronçon étant plus court que le premier sous-tronçon pendant lequel les moyens d'éjection de carotte sont désactivés ;
- après achèvement de la course d'éjection de l'organe moulé, on retire la carotte et l'organe moulé du dispositif de moulage.

Un organe en plastique comprend un réflecteur formant miroir concave pour dispositif optique pour véhicule automobile, ce réflecteur comprenant une douille arrière de réception d'un ensemble formant une source de lumière, et en ce qu'il est obtenu par un procédé tel que défini ci-dessus.

Suivant d'autres caractéristiques optionnelles de cet organe moulé :
- le réflecteur comporte un bord avant prolongé par une jupe ;
- l'organe est obtenu par un procédé utilisant un dispositif de moulage tel que défini ci-dessus.

L'invention sera mieux comprise à la lecture de la description qui va suivre donnée uniquement à titre d'exemple et faite en se référant aux dessins annexés dans lesquels :
- la figure 1 est une vue en perspective d'un organe en plastique moulé selon l'invention ;
- la figure 2 est une vue en perspective d'une partie de l'organe de la figure 1 avec une coupe suivant le plan II-II de la figure 1 ;
- la figure 3 est une vue schématique en coupe d'un dispositif de moulage ;
- les figures 4 à 9 sont des vues d'une partie mobile du dispositif de moulage représenté sur la figure 3, dans différentes configurations de fonctionnement du dispositif de moulage.

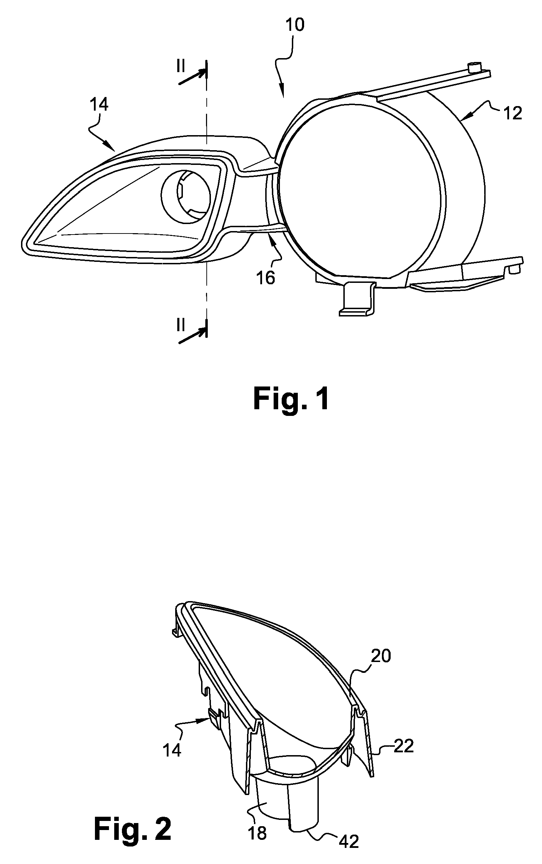

On a représenté sur les figures 1 et 2 un organe en plastique moulé selon l'invention, désigné par la référence générale 10. Dans l'exemple décrit, cet organe 10 en plastique est destiné à être intégré dans un dispositif optique pour véhicule automobile assurant au moins deux fonctions d'éclairage, à savoir une fonction de projecteur et une fonction d'indicateur de direction.

Plus particulièrement, l'organe en plastique, formé en une seule pièce moulée, comporte une partie formant enjoliveur 12, pour des moyens d'éclairage à faisceau elliptique assurant la fonction de projecteur, et une partie formant réflecteur 14, pour des moyens d'éclairage assurant la fonction d'indicateur de direction. L'enjoliveur 12 et le réflecteur 14 sont reliés entre eux par une partie de liaison 16.

Le réflecteur 14, formant un miroir concave, comporte une douille arrière 18 de réception d'un ensemble (non représenté) formant source de lumière. De plus, le réflecteur 14 comporte un bord avant 20 prolongé par une jupe 22. La jupe 22 est donc reliée au reste du réflecteur par un pli de matière plastique formant le bord 20.

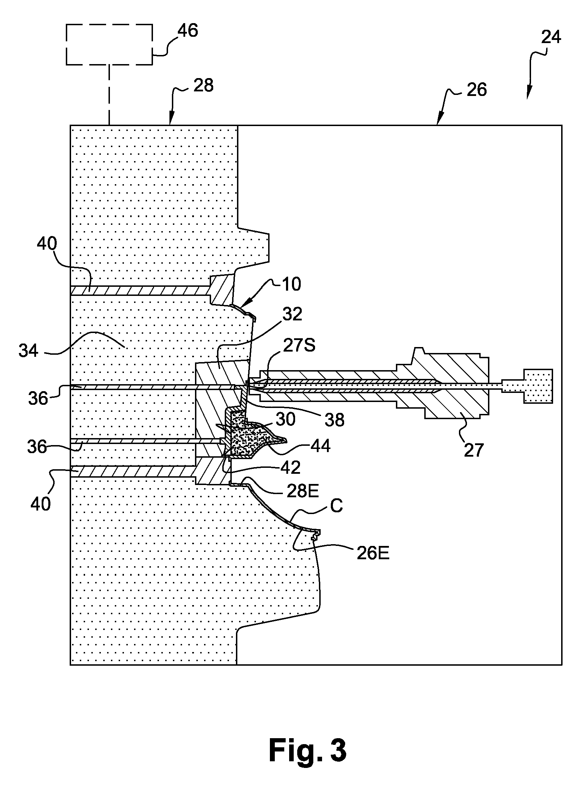

L'organe en plastique 10 est fabriqué est formé par injection de plastique, par exemple de polycarbonate haute température (PC HT) dans un dispositif de moulage selon l'invention représenté sur les figures 3 à 9 et désigné par la référence 24.

Le dispositif de moulage 24 comprend deux parties, respectivement fixe 26 et mobile 28. Ces parties fixe 26 et mobile 28 sont déplaçables l'une par rapport à l'autre, en translation, entre des positions d'ouverture et de fermeture du dispositif de moulage.

Les deux parties 26, 28 portent deux empreintes 26E, 28E respectives formant une cavité C de moulage de l'organe en plastique. Sur la figure 3, on a représenté la cavité C remplie par la matière plastique formant l'organe moulé 10.

La partie fixe 26 du dispositif de moulage 24 porte une buse classique 27 d'injection de matière plastique dans la cavité C. La buse 27 est munie d'un orifice de sortie de matière plastique injectée 27S.

La partie mobile 28 comprend un canal froid 30 ménagé, par exemple, dans un élément 32 rapporté sur une embase 34 de la partie mobile 28.

Le dispositif de moulage 24 comprend des éjecteurs 36 de carotte formant des moyens mobiles destinés à éjecter de l'empreinte 28E de la partie mobile une carotte 38 formée dans le canal froid 30.

Le dispositif de moulage 24 comprend également des éjecteurs 40 d'organe moulé formant des moyens mobiles destinés à éjecter de l'empreinte 28E de la partie mobile l'organe moulé 10.

Les éjecteurs 36, 40 sont déplaçables en translation sensiblement parallèlement à la direction d'ouverture et de fermeture du dispositif de moulage 24.

On notera que le canal froid 30 relie l'orifice de sortie 27S de la buse d'injection 27 et la cavité C de moulage. Plus particulièrement, le canal froid 30 débouche dans une partie de l'empreinte 28E de la partie mobile qui est destinée au moulage de la douille arrière 18. De préférence, comme on peut le voir sur les figures 2 et 3, le canal froid 30 comporte une extrémité formant un point d'injection de matière plastique au niveau d'un prolongement 42 vers l'arrière de la douille 18.

En se référant notamment à la figure 3, on voit qu'une partie de l'empreinte 28E ménagée sur la partie mobile 28 est délimitée par une sous-partie 44 de cette partie mobile, appelée cale 44.

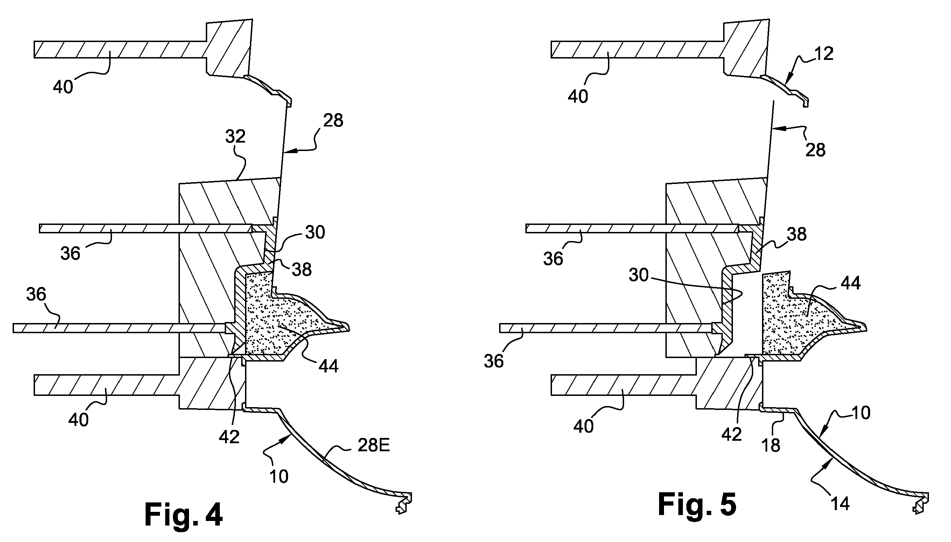

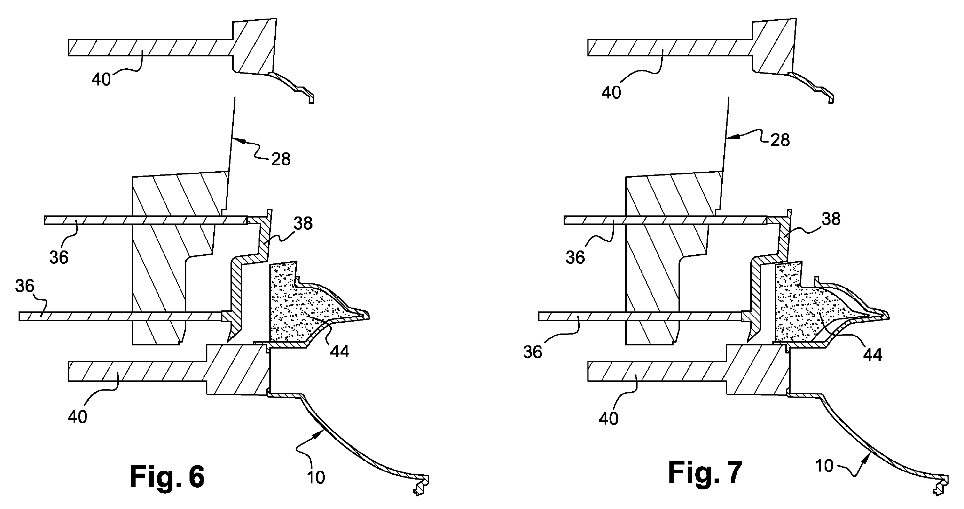

Comme on peut le voir sur les figures 5 et 6, la cale 44 est déplaçable, de préférence sensiblement parallèlement à la direction d'ouverture et de fermeture du dispositif de moulage 24, entre une position entravant la course d'éjection de la carotte 38, telle que représentée sur la figure 4, et une position dégageant cette course d'éjection de la carotte 38, telle que représentée sur la figure 7.

Le dispositif de moulage 24 comprend encore des moyens 46 de séquencement des déplacements des moyens 36 d'éjection de carotte, de la cale 44 et des moyens 40 d'éjection d'organe moulé.

Ces moyens de séquencement 46 sont de type classique et comprennent notamment des moyens automatiques programmables.

On décrira ci-dessous les principales étapes d'un procédé selon l'invention pour le moulage de l'organe en plastique 10 au moyen du dispositif de moulage 24.

Tout d'abord, le dispositif de moulage 24 étant dans une configuration fermée, on moule l'organe en plastique 10 dans la cavité C de ce dispositif de moulage 24.

La matière plastique est injectée dans la cavité C à partir de la buse 27 et par l'intermédiaire du canal froid 30 débouchant dans la partie de la cavité C destinée à former le prolongement 42 de la douille 18.

Après moulage, on démoule l'organe en plastique 10 en faisant réaliser les étapes suivantes, par exemple par les moyens 46 de séquencement.

Tout d'abord, on déplace la partie mobile 28 par rapport à la partie fixe 26 du dispositif de moulage 24. Pendant cette étape d'ouverture du dispositif de moulage 24, l'organe moulé 10 reste solidaire de la partie mobile 28.

Puis, on actionne les éjecteurs 40 de l'organe moulé 10 de façon à faire parcourir à cet organe moulé 10 une course dont les principales étapes sont illustrées sur les figures 5 à 7.

Pendant une partie de cette course, la cale 44 est déplacée dans le même sens que l'organe moulé 10 pour dégager la course d'éjection de la carotte 38 (voir figures 5 et 6).

Dans la course d'éjection de l'organe moulé 10 on distingue les premier et second tronçons ci-dessous.

Pendant le premier tronçon de la course d'éjection de l'organe moulé 10, la cale 44 est déplacée conjointement avec l'organe moulé 10, si bien que cet organe moulé 10 reste solidaire de la cale 44. Ce premier tronçon comporte un premier sous-tronçon (par exemple de 20 mm) pendant lequel les éjecteurs 36 de carotte sont désactivés (voir figure 5) suivi d'un second sous-tronçon (par exemple de 55 mm) pendant lequel les éjecteurs 36 de carotte sont activés (voir figure 6). On notera que la carotte 38 se sépare de la douille 18 lors du premier sous-tronçon de la course, par rupture de la matière reliant la carotte 38 et la douille 18.

Pendant le second tronçon de la course d'éjection de l'organe moulé 10, la cale 44 est immobilisée (voir figure 7), si bien que l'organe moulé 10 se sépare de cette cale 44.

On notera que pendant le second tronçon de la course d'éjection de l'organe moulé 10 (voir figure 7), les éjecteurs 36 de carotte restent activés. Toutefois, ce second tronçon est plus court (par exemple de l'ordre de 15 mm) que le premier sous-tronçon pendant lequel les éjecteurs de carotte 36 sont désactivés, ceci pour maintenir un espacement suffisant entre la carotte 38 et la cale 44 afin de permettre le dégagement de cette carotte 38.

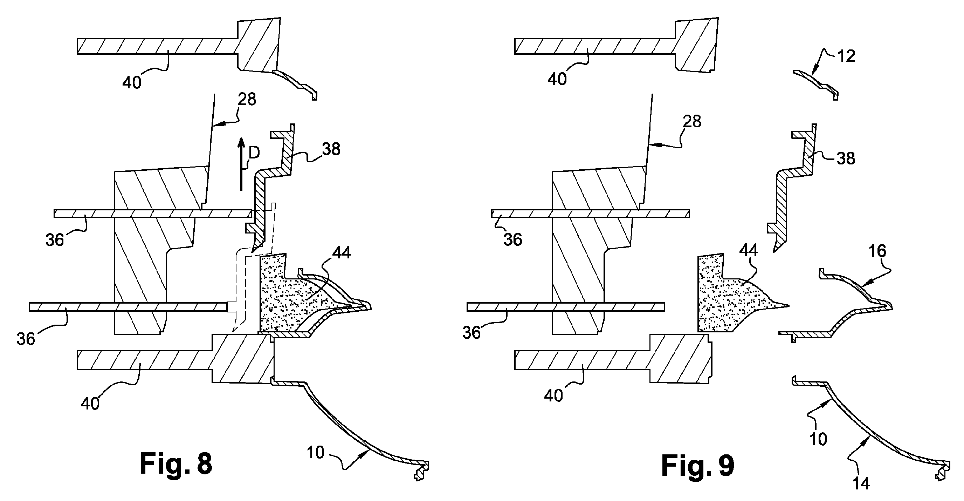

Ensuite, après achèvement de la course d'éjection de l'organe moulé 10, on retire la carotte 38 et l'organe moulé 10 de la partie mobile 28 du dispositif de moulage 24, à l'aide de moyens robotisés classiques (voir figures 8 et 9). Ainsi, les moyens robotisés peuvent, par exemple, déplacer la carotte 38 dans le sens de la flèche D représentée sur la figure 8, sensiblement transversalement à la direction de déplacement des éjecteurs 36, 40, de façon à éloigner cette carotte 38 de la cale 44.

Enfin, les moyens robotisés déplacent la carotte 38 et l'organe moulé 10, qui ont été séparés de la partie mobile 28 du dispositif de moulage, vers des moyens de convoyage classiques (voir figure 9).

## Revendications

1. Procédé de moulage (24) d'un organe en plastique (10), en utilisant un dispositif (24) comprenant deux parties, respectivement fixe (26) et mobile (28), déplaçables l'une par rapport à l'autre, ces deux parties (26, 28) portant respectivement deux empreintes (26E, 28E) formant une cavité (C) de moulage de l'organe en plastique, la partie mobile (28) comprenant :
- un canal froid (30), et
- des moyens mobiles (36) destinés à éjecter de l'empreinte (28E) de la partie mobile une carotte (38) formée dans le canal froid (30), dits moyens d'éjection de carotte,
une partie de l'empreinte (28E) de la partie mobile étant délimitée par une sous-partie, appelée cale (44), de la partie mobile (28), cette cale (44) étant déplaçable entre une position entravant la course d'éjection de la carotte (38) et une position dégageant cette course d'éjection de la carotte (38), la partie mobile (28) comprenant de plus :
- des moyens mobiles (40) destinés à éjecter, de l'empreinte (28E) de la partie mobile, l'organe moulé (10), dits moyens d'éjection d'organe moulé, et
- des moyens (46) de séquencement des déplacements des moyens (36) d'éjection de carotte, de la cale (44) et des moyens (40) d'éjection d'organe moulé, dans lequel on démoule cet organe en plastique (10), après moulage, en réalisant les étapes suivantes :
- on déplace la partie mobile (28) par rapport à la partie fixe (26), l'organe moulé restant solidaire de la partie mobile (28),
et **caractérisé en ce qu'** on actionne ensuite les moyens (40) d'éjection de l'organe moulé de façon à faire parcourir à cet organe moulé une course pendant une partie de laquelle la cale (44) est déplacée dans le même sens que l'organe moulé pour dégager la course d'éjection de la carotte (38).

2. Procédé de moulage selon la revendication 1, dans lequel l'organe en plastique (10) comprend un réflecteur (14) formant miroir concave pour dispositif optique pour véhicule automobile, ce réflecteur (14) comprenant une douille arrière (18) de réception d'un ensemble formant une source de lumière, **caractérisé en ce que** le canal froid (30) communique avec une partie de l'empreinte (28E) de la partie mobile qui est destinée au moulage de cette douille (18).

3. Procédé selon la revendication 1, dans lequel la course d'éjection de l'organe moulé comprend :
- un premier tronçon pendant lequel la cale (44) est déplacée conjointement avec l'organe moulé, si bien que cet organe moulé reste solidaire de la cale (44), ce premier tronçon comportant un premier sous-tronçon pendant lequel les moyens (36) d'éjection de carotte sont désactivés suivi d'un second sous-tronçon pendant lequel les moyens (36) d'éjection de carotte sont activés, et
- un second tronçon pendant lequel la cale (44) est immobilisée, si bien que l'organe moulé se sépare de celle-ci.

4. Procédé selon la revendication 3, dans lequel, pendant le second tronçon de la course d'éjection de l'organe moulé, les moyens d'éjection (36) de carotte sont activés, ce second tronçon étant plus court que le premier sous-tronçon pendant lequel les moyens (36) d'éjection de carotte sont désactivés.

5. Procédé selon l'une quelconque des revendications 1 à 4, dans lequel après achèvement de la course d'éjection de l'organe moulé, on retire la carotte (38) et l'organe moulé (10) du dispositif de moulage.

## Patentansprüche

1. Verfahren zum Formgießen eines Kunststoffteils (10) unter Verwendung einer zwei Teile umfassenden Vorrichtung (24), und zwar ein feststehendes (26) und ein bewegliches (28) Teil, die bezüglich einander verschiebbar sind, wobei die beiden Teile (26, 28) mit zwei Matrizen (26E, 28E) versehen sind, die einen Hohlraum (C) zum Formen des Kunststoffteils bilden, wobei der bewegliche Teil (28) umfasst:
- einen Kaltkanal (30) und
- bewegliche Mittel (36), die dazu bestimmt sind, einen in dem Kaltkanal (30) gebildeten Anguss (38) aus der Matrize (28E) des beweglichen Teils auszuwerfen, sogenannte Angussauswurfmittel,
wobei ein Teil der Matrize (28E) des beweglichen Teils von einem Nebenteil, einem sogenannten Distanzhalter (44), des beweglichen Teils (28) begrenzt wird, wobei der Distanzhalter (44) zwischen einer Position, die den Weg zum Auswerfen des Angusses (38) versperrt, und einer Position, die den Weg zum Auswerfen des Angusses (38) freigibt, verschiebbar ist, wobei der bewegliche Teil (28) ferner umfasst:
- bewegliche Mittel (40), die dazu bestimmt sind, das Formgussteil (10) aus der Matrize (28E) des beweglichen Teils auszuwerfen, sogenannte Formgussteilauswurfmittel, und
- Mittel (46) zum Takten der Verlagerungen der Angussauswurfmittel (36), des Distanzhalters (44) und der Formgussteilauswurfmittel (40),
bei dem das Kunststoffteil (10) nach dem Formguss unter Ausführung der folgenden Schritte entformt wird:
- Verschieben des beweglichen Teils (28) in Bezug auf das feststehende Teil (26), wobei das Formgussteil mit dem beweglichen Teil (28) fest verbunden bleibt,
und **dadurch gekennzeichnet, dass** danach die Formgussteilauswurfmittel (40) solchermaßen betätigt werden, dass das Formgussteil einen Weg zurücklegt, auf dem zum Teil der Distanzhalter (44) in dieselbe Richtung verschoben ist wie das Formgussteil, um den Weg zum Auswerfen des Angusses (38) freizugeben.

2. Formgussverfahren nach Anspruch 1,
bei dem das Formgussteil (10) einen Reflektor (14) umfasst, der einen Konkavspiegel für eine optische Vorrichtung für Kraftfahrzeuge bildet, wobei der Reflektor (14) eine hintere Fassung (18) zur Aufnahme einer eine Lichtquelle bildenden Einheit umfasst, **dadurch gekennzeichnet, dass** der Kaltkanal (30) mit einem Teil der Matrize (28E) des beweglichen Teils in Verbindung steht, das zum Formen der Fassung (18) bestimmt ist.

3. Formgussverfahren nach Anspruch 1,
bei dem der Weg zum Auswerfen des Formgussteils umfasst:
- einen ersten Abschnitt, in dem der Distanzhalter (44) zusammen mit dem Formgussteil bewegt wird, so dass das Formgussteil mit dem Distanzhalter (44) fest verbunden bleibt, wobei der erste Abschnitt einen ersten Unterabschnitt umfasst, in dem die Angussauswurfmittel (36) deaktiviert sind, gefolgt von einem zweiten Unterabschnitt, in dem die Angussauswurfmittel (36) aktiviert sind, und
- einen zweiten Abschnitt, in dem der Distanzhalter (44) blockiert ist, so dass sich das Formgussteil von diesem löst.

4. Formgussverfahren nach Anspruch 3,
bei dem im zweiten Abschnitt des Wegs zum Auswerfen des Formgussteils die Angussauswurfmittel (36) aktiviert sind, wobei der zweite Abschnitt kürzer ist als der erste Unterabschnitt, in dem die Angussauswurfmittel (36) deaktiviert sind.

5. Formgussverfahren nach einem der Ansprüche 1 bis 4,
bei dem am Ende des Wegs zum Auswerfen des Formgussteils der Anguss (38) und das Formgussteil (10) aus der Formgussvorrichtung entnommen werden.

## Claims

1. Method (24) for moulding a plastic member (10), using a device (24) comprising two parts, respectively fixed (26) and movable (28), able to be moved one with respect to the other, these two parts (26, 28) carrying respectively two recesses (26E, 28E) forming a cavity (C) for moulding the plastic member, the movable part (28) comprising:
- a cold channel (30), and
- movable means (36) intended to eject, from the recess (28E) of the movable part, a sprue (38) formed in the cold channel (30), referred to sprue-ejection means,
a part of the recess (28E) of the movable part being delimited by a sub-part, referred to as a wedge (44), of the movable part (28), this wedge (44) being movable between a position interfering with the ejection travel of the sprue (38) and a position leaving clear this ejection travel of the sprue (38), the movable part (28) also comprising:
- movable means (40) intended to eject the moulded member (10) from the recess (28E) of the movable part, referred to as moulded-member ejection means, and
- means (46) for sequencing the movements of the sprue-ejection means (36), of the wedge (44) and of the moulded-member ejection means (40),
wherein this plastic member (10) is removed from the mould, after moulding, by performing the following steps:
- the movable part (28) is moved with respect the fixed part (26), the moulded member remaining attached to the movable part (28),
and **characterised in that** next
- the moulded-member ejection means (40) are then actuated so as to make this moulded member follow a travel, during part of which the wedge (44) is moved in the same direction as the moulded member in order to leave clear the ejection travel of the sprue (38).

2. Moulding method according to claim 1, in which the plastic member (10) comprises a reflector (14) forming a concave mirror for an optical device for a motor vehicle, this reflector (14) comprising a rear sleeve (18) for receiving an assembly forming a light source, **characterised in that** the cold channel (30) communicates with a part of the recess (28E) of the movable part that is intended for moulding this sleeve (18).

3. Method according to claim 1, in which the ejection travel of the moulded member comprises:
- a first portion during which the wedge (44) is moved conjointly with the moulded member, so that this moulded member remains attached to the wedge (44), this first portion comprising a first sub-portion during which the sprue-ejection means (36) are deactivated followed by a second sub-portion during the sprue-ejection means (36) are activated, and
- a second portion during which the wedge (44) is immobilised, so that the moulded member separates therefrom.

4. Method according to claim 3, wherein, during the second portion of the ejection travel of the moulded member, the sprue-ejection means (36) are activated, this second portion being shorter than the first sub-portion during which the sprue-ejection means (36) are deactivated.

5. Method according to any of claims 1 to 4, in which, after completion of the ejection travel of the moulded member, the sprue (38) and the moulded member (10) are removed from the moulding device.
